Europäisches Patentamt

European Patent Office

Office européen des brevets

(11) Publication number: **0 500 969 A1**

# EUROPEAN PATENT APPLICATION
## published in accordance with Art. 158(3) EPC

(21) Application number: **91916597.7**

(22) Date of filing: **19.09.91**

(86) International application number:
**PCT/JP91/01245**

(87) International publication number:
**WO 92/05039 (02.04.92 92/08)**

(51) Int. Cl.⁵: **B60B 3/02**, B21K 1/32, B21K 29/00

(30) Priority: **19.09.90 JP 249793/90**
**02.09.91 JP 248222/91**

(43) Date of publication of application:
**02.09.92 Bulletin 92/36**

(84) Designated Contracting States:
**DE FR GB IT**

(71) Applicant: **WASHI KOSAN CO., LTD.**
**7th Floor You Bldg., 5-7, Horidomecho 1-chome**
**Nihonbashi, Chuo-ku, Tokyo 103(JP)**

(72) Inventor: **YOSHIMURA, Katsunori**
**620-6, Fukudarokke, Takaoka-shi**
**Toyama 933-03(JP)**
Inventor: **FUNAKI, Seiji**
**2-2-28, Matsunami, Chigasaki-shi**
**Kanagawa 253(JP)**

(74) Representative: **Baverstock, Michael George Douglas et al**
**BOULT, WADE & TENNANT 27 Furnival Street**
**London, EC4A 1PO(GB)**

(54) INTEGRAL TYPE WHEEL MADE OF LIGHT METAL HAVING GRAIN FLOW METALLOGRAPHIC STRUCTURE.

(57) An integral type wheel made of light metal having a grain flow metallographic structure containing grain flows, at least some of which continue from the peripheral position of the wheel disk part to the outermost part of the outer rim, extending zigzag with respect to the profile of the outer rim having a plurality of bent parts, and converging at the outermost periphery of the outer rim. The wheel has densely running grain flows excellent in plasticity and workability, and is high in strength. An integral type wheel made of light metal having a grain flow metallographic structure as above is manufactured by means of a hot forging device comprising an upper die (6) equipped with an electric heater (7) and provided with a flash (12) and gutter (13), and a lower die (4).

EP 0 500 969 A1

# F I G. 3

Technical Field

This invention relates to a one-piece forged type wheel of light alloy having a metal flow metallographic structure and more particularly, it is concerned with a one-piece forged type wheel of light alloy having such a metal flow metallographic structure that the light alloy consists of, as a predominant component, aluminum or magnesium and continuous metal flows are present from the periphery of the wheel disk to the outermost diameter pheriphery of the outer rim and are converged in the outermost diameter periphery of the outer rim.

Technical Background

A number of methods for producing automobile wheels of light alloys by forging. Above all, central techniques having been put to practical use are methods disclosed in Japanese Patent Publication Nos. 15209/1972 and 26941/1980, in which a light alloy blank is subjected to split spinning or roll spinning by rollers after previously forging several times and thus finished in a final shape.

When tyres of a same size are fitted to wheels, it is advantageous to reduce the weight of the wheel itself to as light as possible. To this end, various efforts have been made to work the disk part into a mesh type structure with many space parts and to reduce the thickness of the rim parts to as small as possible.

As a shaping means for this purpose, the forging method is very useful, but the shaping means of the prior art, including the methods disclosed, as the central technique, in the above described Japanese Patent Publications, are forging means mainly directed to reduction of the thickness of the mesh shape or rim parts for the purpose of mere weight reduction or heat radiation, or mainly aiming at shortening the working time and reducing the working cost, and do not take presence or formation of a flow of metallographic structure, i.e. metal flows given during forging into consideration and in the shaping means of the prior art, in fact, there is formed no metal flow, at which the present invention aims.

To make a detailed explanation, the method disclosed in the above described Japanese Patent Publication No. 15209/1972 comprises subjecting the outer periphery of a thick ring edge part to split spinning in the direction-along the axis of a wheel and then rolling in the axial direction by means of spinning rollers.

Considering this method in view of the position relationship between the outer rim and disk, the angle thereof is more than 90 degrees, resulting in slippage in the metal flow specially formed in the previous step, and because of necessity of bending a beat seat against the rim by more than 90 degrees, there arises a problem that several heating steps are required and much time is taken.

In addition, the method disclosed in the aboved described 26941/1980 consists in a method comprising a shaping step of a cylindrical article roughly shaped and a finishing step including mechanical working, said shaping step being a mold forging working and said finishing step including mechanical working being carried out by a rotating and squeezing operation and a press enlarging operation, in combination. In this method, however, the split spinning is carried out by the rollers in the direction along the metal flow lines and continuous metal flows are hard to be formed from the disk part to the outer rim.

The rim is ordinarily explained with classifying in an outer rim and inner rim and in general, the outer rim is made narrow and the inner rim is made broad because of fitting the wheel so as to include a brake part and wheel bearing part.

In particular, the structure of the outer rim and the inner metalographic structure thereof should also be watched with keen interest from the standpoint of travelling of an automobile, since the outer rim tends to be subject to strong force and external cracks during cornering.

Considering the above described standpoint, the inventors have made various studies on the method of producing one-piece forged type wheels of light alloy by forging and have proposed a method comprising subjecting a light alloy blank to hot mold forging, thus shaping a one-piece wheel consisting of a disk surface, outer rim and inner rim and then subjecting the inner rim to spinning working (Japanese Patent Publication Nos. 2573/1991 and 2574/1991).

This method is a technique whereby a one-piece forged type wheel of light alloy can effectively be produced with a high working precision and without deforming a pattern of a disk surface formed by forging and in which the flow of metallic grains by forging (i.e. metal flow) is noted.

The inventors have further continued our studies as to a method of producing a one-piece forged type wheel of light alloy as described above and noting the metallographic structure of the wheel obtained by this method, the study has been made on the strength of the outer rim. Consequently, the present invention has been accomplished regarding the interior metallographic structure of an outer rim as important and noting the presence of the flow of the interior metallographic structure of the outer rim, that is, the presence

EP 0 500 969 A1

of metal flows.

Accordingly, the present invention aims at providing a one-piece forged type wheel of light alloy whose outer rim has a higher strength. More specifically, it is an object of the present invention to provide a new one-piece forged type wheel of light alloy having such a metal flow metallographic structure as to be continued from the periphery position of the disk part to the outermost diameter position of the outer rim and further converged in the outermost diameter periphery part.

Disclosure of the Invention

The new one-piece forged type wheel of light alloy having a metallographic structure of metal flows according to the present invention is characterized by:

(1) having metal flows at least a part of which is continued from the periphery position of the disk part to the outermost diameter position of the outer rim,

(2) said metal flows moving in a zigzag direction against the contour of the outer rim having a plurality of bending parts,

(3) having such a metallographic structure of metal flows that the metal flows are converged in the outermost diameter periphery part of the outer rim, and

(4) the metal flows being present in a cross-section passing through the rotary shaft core of the wheel, the most part of which is present in a region within 20 degrees against the cross-section.

The present invention will now be illustrated in detail. In the above described methods the inventors have proposed (Japanese Patent Publication Nos. 2573/1991 and 2574/1991), the shaping is conducted by carrying out hot forging while simultaneously exchanging several kinds of upper dies rapidly, since it is required to largely deform the outer rim in a direction of 65 to 80 degrees from the pattern and rib part of the disk surface and the outer periphery of the disk surface.

The inventors have detailed studies on the method of shaping the outer rim by a hot forging method and the metallographic structure, in particular, the metal flows of the outer rim and consequently, have found that forging of the outer rim is rendered easy and the metal flows can clearly be formed. The present invention is based on this finding.

Brief Description of the Drawings

Fig. 1 is a cross-sectional view of a pre-forged body in the present invention.

Fig. 2 is a cross-sectional view of a one-piece type wheel of light alloy showing the final forged state of the present invention.

Fig. 3 is a schematic view of a forging apparatus consisting of an upper die and a lower die for the production of a one-piece type wheel of light alloy according to the present invention.

Fig. 4 is an enlarged photograph showing a part of a cross-sectional metallogrphic structure of the outer rim of a wheel according to the present invention.

Fig. 5 is an enlarged photograph showing a cross-sctional metallogrphic structure of the whole of the outer rim of a wheel according to the present invention.

Best Embodiment for Practicing the Invention

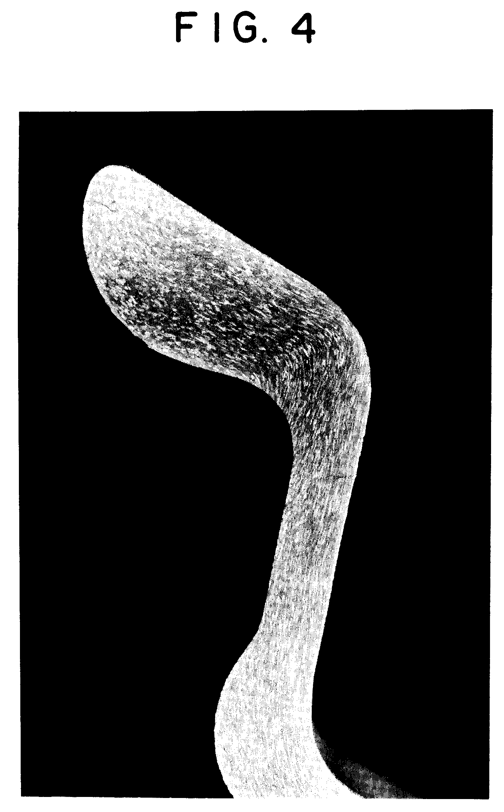

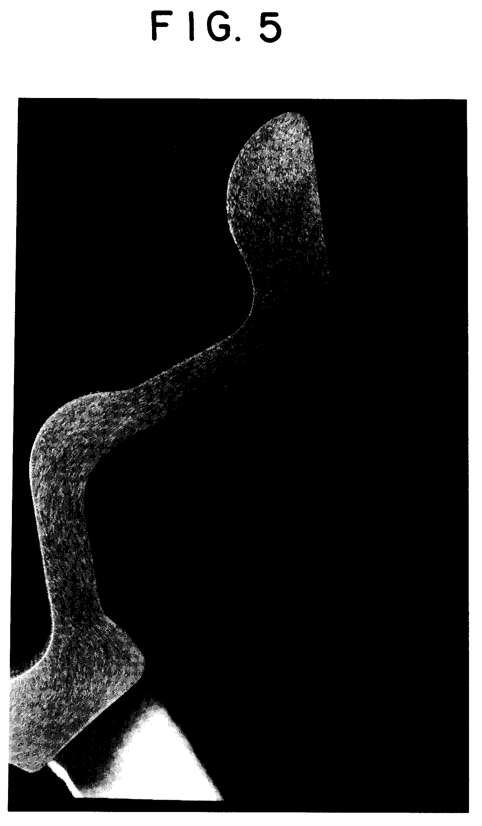

The one-piece type wheel of light alloy having the metallographic structure of metal flows according to the present invnetion will be illustrated in detail referring to Fig. 4 and Fig. 5.

Fig. 4 is an enlarged photograph showing a part of a cross-sectional metallogrphic structure of the outer rim of a wheel according to the present invention and Fig. 5 is an enlarged photograph showing a cross-sctional metallographic structure of the whole of the outer rim of a wheel according to the present invention.

As is evident from Fig. 4 and Fig. 5, the one-piece type wheel of light alloy according to the present invention has clear metal flows or grain flows continued from the periphery position of the disk part to the outermost diameter position to the outer rim.

The outer rim has large bending parts at three positions (Cf. Fig. 5). Thus it is found that the metal flows are formed to be moved in a zigzag direction against the contour of the outer rim having three bending parts and in addition, the metal flows are converged in the outermost diameter periphery part (uppermost part of metallographic structure shown in Fig. 4 and Fig. 5) of the outer rim.

The metal flows formed in the outer rim are present in a cross-sectional plane passing through the rotary shaft core of the wheel and the most part thereof are present in a region of within 20 degrees against the cross-sectional plane.

4

In the cross-sectional shape of the outer rim part of the finished wheel as shown in Fig. 4, cutting work is partly carried out and accordingly, discontinuous parts of metal flows take place in the circumference of the contour. However, this results in no problem on practical use.

In Fig. 4 and Fig. 5, the metal flows are seen as fragments, but they are continuous as a flow of the metallographic structure and form a flow of metallographic structure continued in a zigzag direction against the contour of the outer rim. A part of the metal flows are discontinuous in cut form at the periphery of the outer rim, but appear again on the extension lines thereof and are converged in the outermost diameter periphery part of the outer rim with other continuousmetal flows.

Generally, in a metallic article subject to plastic deformation, an anisotropy in mechanical property is formed by the flow of the metallogrphic structure, i.e. by formation of metal flows. That is, the mechanical strength and elongation are most excellent in a direction in parallel with the metal flows, most inferior in a direction perpendicular to the metal flows and in parallel with the forging pressing direction and moderate in other directions.

The one-piece type wheel of light alloy of the present invention has excellent functions and benefits, e.g. high mechanical strength at the bent parts of the outer rim, since the metal flows are formed in a zigzag direction against the contour in the outer rim structure having large bent parts at the three positions as shown in Fig. 5.

A method of producing the above described one-piece type wheel of light alloy having the metallographic structure of metal flows will now be illustrated.

This method comprises subjecting a disk part and an outer rim part to continuous hot forging, during which:

(a) in a hot forging apparatus, one movable die (upper die) is previously warmed or kept warm, while another die (lower die) is maintained at a temperature slightly different from the former temperature,

(b) the upper die is rapidly exchanged, while a lubricant is simultaneously allowed to be present,

(c) the hot forging is carried out with such a temperature gradient that the temperature of the outer circumference of the upper die is similar to or higher than that of the central part thereof, thereby readily forming metal flows in the outer rim, and

(d) The outer rim edge-forming part of the die is provided with a flash and gutter and when the upper die descends and approaches the lower die, an excessive metal of a light metal blank present between both the dies is caused to flow into the gutter through the flash, thereby converging the metal flows in the outermost diameter periphery part of the outer rim.

The above described method will further be illustrated in detail. In the the hot forging method comprising continuously hot forging the disk part and outer rim part, as described above, a billet of light alloy should first be shaped in a pre-forged body and this pre-forged body should be preheated before the hot forging.

The preheating temperature of this pre-forged body, dpending upon the variety of the light alloy billet as a raw material blank, is preferably about 400 °C. If the preheating temperature is too high, crystal grains tend to be coarsened to result in a swirl in the bent part of the outer rim, while if too low, wrinkles appear in the bent part. They are not preferable because of unfavorably affecting formation of the metal flows.

One movable die (upper die) of the hot forging apparatus should previously be warmed or maintained warm so as to maintain the temperature difference slightly different from the other die (lower die), because it is required to rapidly exchange several varieties of dies (upper dies) for the purpose of making it easy to form the metal flows.

The temperature of each of the upper die and lower die, depending upon the variety of the light alloy billet similarly to the preheating temperature of the pre-forged body, is also preferably about 400 °C.

In order to allow the material to smoothly flow through a long and narrow path of the outer rim part and form clear metal flows, it is preferable to maintain the temperature of the outer circumferential part similar to that of the co-central part of the upper die and lower die or to provide a temperature gadient such that the former temperature is higher than the latter temperature. The provision of the temperature gradient is preferable.

The forging temperature will be illustrated. Generally, it is required that the hot forging is carried out at a temperature range within which the deformability of a material is satisfied and enlargement of this temperature range advantages the working operation. In the present invention aiming at forming metal flows, however, an elevated forging temperature results in over heat and burning both of which cause formation of the metal flows to be hindered because the over heat results in coarsening of the crystal grains and the burning results in oxidation of impurities at the crystal grain boundaries and melting a part thereof.

The forging temperature, depending upon the variety of the light alloy billet similarly to the preheating temperature of the pre-forged body and the temperature of the dies as described above, is also preferably about 400 °C.

Moreover, the material temperature at the end of the forging is preferably in the range of from 300°C to the forging temperature, since if higher than the upper limit, the deformation resistance is low, but the crystal grains are coarsened, while if lower than the lower limit, the residual stress remains and inner cracking takes place.

For the purpose of making easy formation of the metal flows, it is preferable to use a lubricant, whereby friction between the light alloy blank and the surface of a mold can be decreased, plastic flowing and formation of the metal flow can be made easier and the shaping load can be suppressed to lower.

As the lubricant, there can preferably be used a graphite type lubricant, which is ordinarily sprayed against the dies.

In addition, in the above described hot forging, it is most suitable to particularly provide the edge part-forming position of the outer rim of the dies, e.g. upper die with a flash and gutter. When the upper die descends and approaches the lower die, an excessive metal present between both the dies is allowed to flow in the gutter through the flash and thus a fin part is formed for the material filled in the outer rim part. Consequently, there is no counter flow of the material in this part and strong convergence of the metal flows is formed in the outermost diameter periphery part of the outer rim.

That is, the light alloy blank is filled in a mold with approaching of the upper die and lower die and an excessive metal is flowed in the gutter through a narrow gap called flash to form a fin part. The light alloy blank passing through the flash gap meets with a resistance by friction, as an important factor, since if the gap is large, filling deficiency takes place and the metal flows are not so formed as aimed at by the present invention although there is no care of the pressure, while if the gap is small, the pressure is increased to have bad influences upon the life of the mold and machines. The gutter functions to reduce the pressure.

The gap distance can suitably be determined depending on the variety, weight (amount), etc. of the light alloy used.

As the light alloy suitable for forming the metal flows according to the present invention, there can be used light alloys conatining aluminum, magnesium, etc. as a predominant component and above all, light alloys containing aluminum as a predominant component are preferably exemplified without limiting the scope of the present invention. Pariticularly, an aluminum-base alloy having the following composition is most suitable:

| Chemical Component | Weight % |
|---|---|
| Si | 0.4-0.8 |
| Fe | at most 0.7 |
| Cu | 0.15-0.40 |
| Mn | at most 0.15 |
| Mg | 0.8-1.2 |
| Cr | 0.04-0.35 |
| Zn | at most 0.25 |
| Ti | at most 0.15 |
| sum of other metals except Al | at most 0. 15 |
| each of the other metals Al | at most 0.05 balance |

Use of this alloy is particularly desirable, since it is excellent in not only strength and corrosion resistance, but also forging property and can readily be forged to form clear forging lines. This alloy is known as 6000 series alloy (Alloy No. 6061).

According to the method of the present invention, as illustrated above in detail, the metallographic structure having compact metal flows excellent in toughness and workability, at which the present invention aims, (i.e. metallographic structure having the metal flows as claimed in Claim 1), can readily be obtained and a wheel with a high strength can be produced by carrying out hot forging in such a manner as preheating the upper die, rapidly exchanging the die, allowing a lubricant to be present, maintaining the hot forging condition that the temperature of the outer circumfrence of the die is the same as that of the central part of the die or providing a temperature gradient that the outer circumference is higher, and using a die provided with a flash and gutter at the outer rim edge part-forming position.

Examples

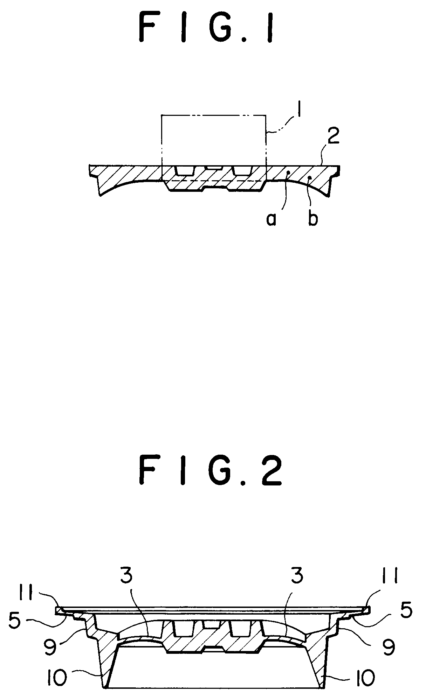

Examples of the present invention will now be illustrated in detail with reference to Fig. 1 to Fig. 5.

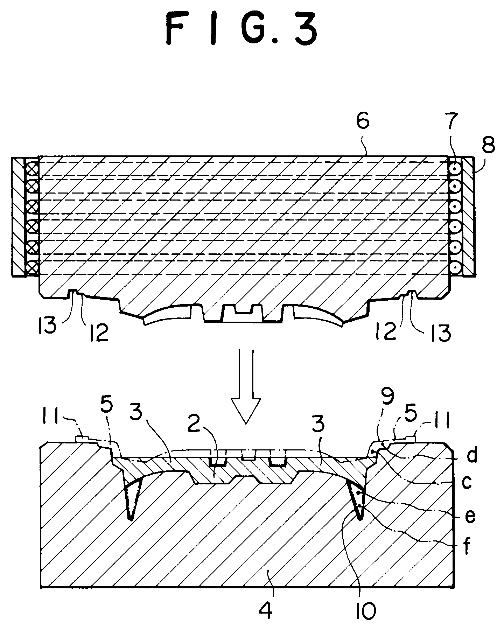

Fig. 1 is a cross-sectional view of a pre-forged body in the present invention, Fig. 2 is a cross-sectional view of a one-piece type wheel of light alloy showing the final forged state of the present invention, Fig. 3 is a schematic view of a forging apparatus consisting of an upper die and a lower die for the production of a one-piece type wheel of light alloy according to the present invention, Fig. 4 is an enlarged photograph showing a part of a cross-sectional metallogrphic structure of the outer rim of a wheel according to the present invention and Fig. 5 is an enlarged photograph showing a cross-sectional metallogrphic structure of the whole of the outer rim of a wheel according to the present invention.

Firstly, a heated billet (light alloy billet) 1 was shaped in a pre-forged body 2 (Cf. Fig. 1), heated at about 400 °C and placed on a lower die 4 shown in Fig. 3, previously heated at about 400 °C by a gas burner (not shown). During the same time, a care should be taken that the outermost periphery part of the pre-forged body 2 is brouhgt into contact with the side of the lower die 4.

The pre-forged body 2 was compressed by an upper die (movable die) 6, followed by starting hot forging, and the die 6 was rapidly exchanged with other upper dies (not shown), followed by repeating the hot forging.

The die 6 had such a structure that the outer circumference thereof was wound by an electric heater 7 and further covered with a heat insulator 8, as shown in Fig. 3. The electric insulator 7 was provided so as to improve a forging means for effecting the hot forging by using several kinds of upper dies 6 and rapidly exchanging them and to maintain the upper die 6 before the exchanging at about 400 °C.

The upper die 6 descended as shown by an arrow in Fig. 3 and, as shown by a broken line in Fig. 3, an outer rim part 9, inner rim part 10 and disk part 3 were simultaneously forged. The outermost periphery part 5 of the pre-forged body 2 had such a form as obtained in swageing forging and an upper and lower spaces were filled with the pre-forged body to form the outer rim part 9 and inner rim part 10.

The metal flows during plastic deformation of a blank billet 1 was in a direction of a → b in Fig. 1 in the pre-forged body 2, c → d in Fig. 3 in the outer rim part 9 and e → f in Fig. 3 in the inner rim part 10.

For the purpose of forming clear metal flows in the outer rim part 9, in particular, converging the metal flows in the outermost periphery part of the outer rim part 9 (uppermost part of metallographic structure in Fig. 4 and Fig. 5), the upper die was provided with a flash 12 and gutter 13. When the upper die 6 descended and approached the lower die 4, an excessive metal of the light metal blank present between both the dies flowed in the gutter 13 through the flash 12 to form a fin part 11 for the material filled in the outer rim part 9. In this part, the material was not reversely flowed, so that a stong convergence of the metal flows was fromed in the outermost periphery part of the outer rim part 9. This serves to increase the toughness of the wheel.

Since the outer rim part 9 has three large bent parts as shown in the enlarged photograph of Fig. 5, the metal flows smoothly moved in a zigzag direction are required for improving the toughness. If the temperature of the light alloy blank is too high, coarsening of the crystal grains is caused and swirls are formed in the these three bent parts, while if too low, on the other hand, wrinkles take place. Thus control of the temperatrue during the hot forging is very imporatnt.

For the purpose of allowing the light alloy blank to smoothly flow through the long and narrow path of the outer rim 9, the upper die 6 and lower die 4 are preferably maintained in such a temperature gradient that the temperature of the outside is rather higher than that of the central part. In particular, it is very effective to carry out the heating by using an upper die 6 provided with an electric heater 7, as shown in Fig. 3, passing electric current through the electric heater 7 and thus providing the above described temperature gradient.

According to the above described method, there is obtained a one-piece-type wheel of light alloy consisting of the disk part 3, outer rim part 9 and inner rim part 10, as shown in Fig. 2, the outer rim part 9 of this wheel having such a metallographic structure that the metal flows moving along the contour of the outer rim in a zigzag direction and converged in the outermsot diameter periphery part of the outer rim, as shown in Fig. 4 and Fig. 5.

According to this method, it is rendered possible to extinguish segregation of the structure contained in the blank and the blowholes and coarse strcture by the compressing action and to make finer deformed grains during cooling by recrystallization. Thus a wheel having the above described metal flows can readily be obtained.

In this Example, the outside temperature of each of the dies was substantially maintained at about 400 °C throughout continuous operation of one day. The inner rim part 10 was subjected to metal spinning and rolling, and then subjected to plastic defromation in a finished form, thus obtaining a product.

Utility and Possibility on Commercial Scale

As has been described so far in detail, the present invention provides a one-piece forged type wheel of light alloy having a metallographic structure having metal flows at least a part of which is continued from the periphery position of the disk part to the outermost diameter position of the outer rim, said metal flows moving in a zigzag direction against the contour of the outer rim having a plurality of bending parts, and having such a metallographic structure of metal flows that the metal flows are converged in the outermost diameter periphery part of the outer rim, whereby excellent toughness, workability and strength can be given to the wheel.

**Claims**

1.  A one-piece type wheel of light alloy containing, as a predominant component, aliminum or magnesium having such a metal flow metallographic structure as having metal flows at least a part of which is continued from the periphery position of the disk part to the outermost diameter position of the outer rim, said metal flows moving in a zigzag direction against the contour of the outer rim having a plurality of bending parts and being converged in the outermost diameter periphery part of the outer rim.

2.  The one-piece type wheel of light alloy having the metal flow metallographic structure, as claimed in Claim 1, wherein the metal flows are present in a cross-sectional plane passing through the rotary shaft core of the wheel, the most part of which are present in a region within 20 degrees against the cross-sectional plane.

8

# F I G. 1

# F I G. 2

# F I G. 3

# F I G. 4

# F I G. 5

# INTERNATIONAL SEARCH REPORT

International Application No PCT/JP91/01245

## I. CLASSIFICATION OF SUBJECT MATTER (if several classification symbols apply, indicate all) [6]

According to International Patent Classification (IPC) or to both National Classification and IPC

Int. Cl$^5$  B60B3/02, B21K1/32, B21K29/00

## II. FIELDS SEARCHED

### Minimum Documentation Searched [7]

| Classification System | Classification Symbols |
|---|---|
| IPC | B60B3/00-3/04, B21J1/06, 5/02, 9/00-9/08, B21K1/28-1/42, 29/00 |

Documentation Searched other than Minimum Documentation
to the Extent that such Documents are Included in the Fields Searched [8]

| | |
|---|---|
| Jitsuyo Shinan Koho | 1926 - 1991 |
| Kokai Jitsuyo Shinan Koho | 1971 - 1991 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | JP, A, 56-119640 (Diesel Kiki Co., Ltd.), September 19, 1981 (19. 09. 81) & GB, A, 2070481 & DE, A1, 3106457 & GB, B2, 2070481 & US, A, 4399681 & DE, C2, 3107457 & JP, B2, 62-018254 | 1, 2 |
| A | JP, A, 58-174713 (Miyakawa Kinzoku Kogyo K.K.), October 13, 1983 (13. 10. 83), (Family: none) | 1, 2 |
| A | JP, A, 47-42450 (United Aircraft Corp.), December 16, 1972 (16. 12. 72) & IL, A0, 38817 & US, A, 3698219 & FR, A5, 2137468 & IT, A, 951413 & GB, A, 1334641 & CH, A, 554202 & CA, A1, 958922 & CA, A2, 969393 & SE, B, 380747 & SE, C, 380747 & IL, A1, 38817 & FR, B1, 2137468 & JP, B2, 55-023696 & DE, C2, 2210582 | 1, 2 |
| A | JP, Y2, 54-13389 (Kawasaki Yuko K.K.), June 7, 1979 (07. 06. 79), (Family: none) | 1, 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 3, 1991 (03. 12. 91) | December 17, 1991 (17. 12. 91) |

| International Searching Authority | Signature of Authorized Officer |
|---|---|
| Japanese Patent Office | |

Form PCT/ISA/210 (second sheet) (January 1985)